(19) Europäisches Patentamt / European Patent Office / Office européen des brevets

(11) **EP 4 443 197 A1**

(12) **DEMANDE DE BREVET EUROPEEN**

(43) Date de publication:
**09.10.2024 Bulletin 2024/41**

(21) Numéro de dépôt: **24168209.5**

(22) Date de dépôt: **03.04.2024**

(51) Classification Internationale des Brevets (IPC):
**G01S 19/20** (2010.01)      **B61L 25/02** (2006.01)
**G01S 19/50** (2010.01)

(52) Classification Coopérative des Brevets (CPC):
**G01S 19/50; B61L 25/025; G01S 19/20;**
B61L 2205/04

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **07.04.2023 FR 2303479**

(71) Demandeur: **THALES**
**92190 Meudon (FR)**

(72) Inventeurs:
• **LAVIRON, Philippe**
**3800 BORDEAUX (FR)**
• **LOUVE, Pierre**
**75016 PARIS (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCÉDÉ DE CONTRÔLE D'INTÉGRITÉ, PROGRAMME D'ORDINATEUR ET DISPOSITIF ASSOCIÉS**

(57)  L'invention concerne un procédé de contrôle d'une localisation estimée d'un engin (40) mobile recevant des signaux de géopositionnement de satellites Sk, k=1 à s ;
une base de données (13) stockant les coordonnées géographiques de balises virtuelles (B) et le cap du segment de trajectoire sur lequel la balise virtuelle se trouve ;
ladite localisation indiquant une balise virtuelle, B1, estimée sur le même segment de trajectoire que l'engin, selon lequel pour k = 1 à s : calcul du retard, $\Delta\tau_{S_k}(t, B1)$, entre le signal de géostationnement reçu de Sk et le signal de géostationnement théorique ; estimation des valeurs *cap* et *RxB*1 vérifiant

$$\Delta\tau_{S_1}(t, B1) = \frac{1}{c}(\cos(el_1))^{-1}\cos(az'_1)\,RxB1 + \varepsilon_1$$
$$\vdots$$
$$\Delta\tau_{S_s}(t, B1) = \frac{1}{c}(\cos(el_s))^{-1}\cos(az'_s)\,RxB1 + \varepsilon_s$$

ladite localisation étant identifiée comme non fiable en fonction de la comparaison du cap estimé avec la valeur, stockée, du cap du segment de trajectoire de la balise B1.

[Fig. 3]

**Description**

**Domaine technique :**

La présente invention concerne le domaine du contrôle de l'intégrité des estimations de position effectuées par géo-localisation satellite.

**Technique antérieure :**

La précision absolue d'une position obtenue par un système de détermination de position, traditionnellement par triangulation de données issues des satellites et reçues par un récepteur satellite et est entachée d'erreurs que l'on peut exprimer et sommer de la manière suivante :

$$UERE^2 = (E_{\_SIS})^2 + (E_{\_Tropo})^2 + (E_{\_Iono})^2 + (E_{\_Rx})^2 + (E_{\_Multitrajet})^2$$

où

l'UERE (« User Equivalente Range Error ») est l'erreur de plage équivalente utilisateur ;

$E_{\_SIS}$ représente les erreurs du « Signal In Space » i.e. provenant des satellites (horloge satellite, trajectoire...)

$E_{\_Tropo}$, respectivement $E_{\_Iono}$, sont les erreurs liées aux interférences dues aux réflexions du SIS sur la couche troposphérique, respectivement ionosphérique ;

$E_{\_RX}$ sont les erreurs propres au récepteur satellite ;

$E_{\_Multitrajet}$ sont les erreurs dues aux réflexions du signal satellitaire sur des obstacles avant d'atteindre le récepteur satellite.

L'erreur de position peut être modélisée et donc estimée en supposant que tous les satellites émettent correctement et en fonction du rapport signal à bruit (SNR) ; cependant cela reste une valeur statistique.

Pour la sécurité critique, à l'erreur de précision absolue, s'ajoute le concept d'intégrité, notion étroitement associée à l'application envisagée et décrite de la manière suivante :

- une limite maximale d'erreur de précision tolérable, utilisant une limite d'alerte (AL) et un rayon (ou niveau) de protection (LP), spécifique à l'application : par exemple, dans le domaine ferroviaire, la valeur de 4 mètres peut être choisie comme erreur maximale transversale entre les voies dans le cas statique du démarrage d'un train, ou encore la valeur de 30 mètres peut être choisie comme erreur maximale longitudinale dans le cas dynamique d'un train en marche ;

- un temps maximal d'alerte tolérable : TTA (« Time To Alert »), i.e. la durée maximale tolérable de détection de la panne, pendant laquelle l'application peut « vivre » avec une position « hors limite » ; un exemple de TTA, pour le ferroviaire, est une valeur de 3 secondes ;

- une probabilité tolérable de « non détection », Pnd, des anomalies (i.e. la probabilité de non détection que l'erreur de position est au-delà de la limite maximale AL), sur une durée donnée : par exemple : $2.10^{-7}$ sur 150 secondes ;

- une disponibilité du service pour lequel la précision est requise : par exemple 95% du temps.

L'évaluation de l'intégrité d'une position (on considère ici la position comme valeur d'intérêt, mais les mêmes aspects sont valables quant à d'autres valeurs, par exemple la vitesse) vise à fournir une mesure de la fiabilité de la position calculée par un système de détermination de position, et à alerter l'utilisateur dans le cas d'une position jugée non fiable.

L'intégrité est définie comme le degré de confiance que l'on peut avoir dans l'information de localisation fournie par le système. Elle inclut la capacité à fournir à temps une alerte valide quand le système ne doit pas être utilisé pendant l'opération.

La mesure de la fiabilité de la position se fait par un algorithme de contrôle d'intégrité via le calcul d'un volume de protection autour de la position estimée, ce volume de protection étant typiquement (ou comprenant au moins) un cylindre de protection et représentant un indice de confiance : plus on réduit le volume de protection, plus on réduit l'espace des erreurs possibles.

Ce volume de protection est construit à partir d'au moins un niveau de protection horizontal (HPL) et d'un niveau de protection vertical (VPL).

En temps réel, le système ne connaît pas a priori son erreur de position absolue. Pour décider si la position déterminée est utilisable, notamment pour déterminer si l'erreur est inférieure à un seuil fixé, les niveaux de protection calculés sont comparés à des niveaux d'alerte : VPL est comparé au niveau d'alerte vertical VAL et HPL est comparé au niveau d'alerte horizontal HAL. Si un niveau de protection dépasse le niveau d'alerte, l'utilisateur doit être alerté en un temps inférieur au TTA, et la position est considérée comme non utilisable, mais le système de détermination de position reste intègre.

Il y a en revanche perte d'intégrité lorsque l'erreur absolue de positionnement est supérieure au niveau d'alerte, et que l'algorithme ne le détecte pas (niveau de protection inférieur au niveau d'alerte).

On définit ainsi le risque de perte d'intégrité IR :

$$IR = \text{Probabilité}(XPE > XAL \mid XPL < XAL),$$

avec X prenant la valeur V, H suivant que l'on considère le plan vertical ou horizontal XPE étant la distance entre la position déterminée et la position vraie dans le plan vertical ou horizontal considéré.

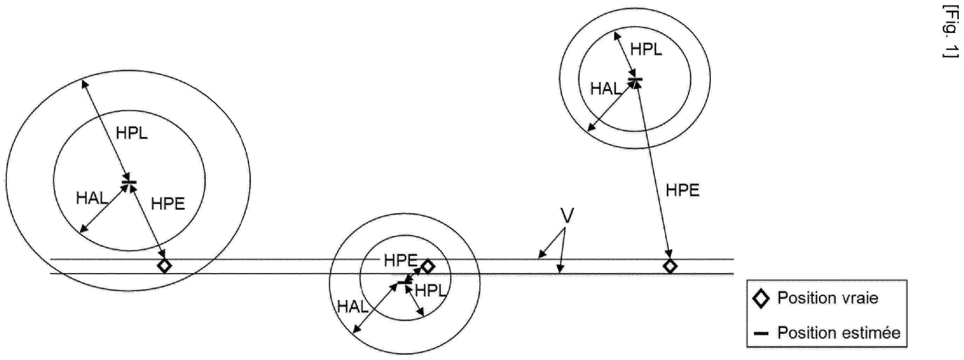

A titre d'illustration du concept d'intégrité, sur la figure 1 est représentée une voie ferrée V vue de haut empruntée par un train embarquant un système de détermination de localisation. Le plan de la figure correspond au plan horizontal. Trois situations sont commentées successivement, en partant de la gauche de la figure et en se dirigeant vers la droite. Pour chacune de ces situations, la position vraie est représentée par un losange, la position déterminée par le système est représentée par un tiret et on considère un cylindre de protection, projeté dans le plan horizontal par un cercle.

Dans la première situation, à gauche de la figure 1, le niveau de protection calculé HPL est supérieur au niveau d'alerte HAL ; on constate que HPE > HAL : la détermination de position du système est considérée comme non disponible mais le système est intègre.

Dans la deuxième situation, au centre de la figure 1, le niveau de protection calculé HPL est inférieur au niveau d'alerte HAL ; on constate que HPE < HAL : la détermination de position du système est considérée comme disponible et le système est intègre.

Dans la troisième situation, à droite de la figure 1, le niveau de protection calculé HPL est inférieur au niveau d'alerte HAL ; on constate que HPE > HAL : la détermination de position du système est considérée comme disponible et le système est non intègre : c'est notamment de ce type de situation que la présent invention propose de se prémunir.

Le risque de perte d'intégrité, IR, est une entrée de l'algorithme mentionné qui calcule les niveaux de protection. Il est classiquement fixé à $10^{-7}$ en aviation ; les probabilités cibles en ferroviaire sont de l'ordre de $10^{-10}$.

Outre le risque de perte d'intégrité, l'algorithme de calcul de niveau de protection prend également en entrée une probabilité de fausse alarme, PFA, correspondant à la probabilité d'une détection de non fiabilité alors que l'erreur absolue ne dépasse pas le niveau d'alerte :

$$PFA = \text{Probabilité}(XPL > XAL \mid XPE < XAL)$$

Cette probabilité est classiquement fixée à 0,01 en aviation, à laquelle on fait correspondre la disponibilité de 99%, ces paramètres étant complémentaires.

Dans le cas d'un système de localisation GNSS (« Global Navigation Satellite System »), les algorithmes de contrôle d'intégrité connus utilisent des solutions notamment GNSS RTK, SBAS, EGNOS, RAIM qui présentent des inconvénients divers parmi : besoin de disponibilité d'un certain nombre de satellites en visibilité (RAIM nécessite plus de 5 satellites en visibilité pour réaliser des détections et calculer un niveau de protection), sensibilité aux phénomènes de masquage/multi-trajets/interférences. En outre, les niveaux de protections atteints avec ces méthodes ne permettent pas de réaliser une détection de voie intègre en ferroviaire, où des niveaux de protection de 4m pour un risque de perte d'intégrité de $10^{-10}$ sont requis (comparé par exemple aux 20m de niveau de protection et $10^{-7}$ de risque de perte d'intégrité en aviation).

Il existe donc un besoin de disposer d'une solution de contrôle d'intégrité fiable et applicable notamment aux contraintes du domaine ferroviaire.

L'invention s'applique plus particulièrement au contrôle d'intégrité dans le cas d'une estimation de position $Pi_0$ d'un engin adapté pour se déplacer sur un ensemble de trajectoire(s) prédéfinie(s), ladite position ayant été estimée, par un bloc électronique de localisation comprenant une base de données, en comparant la vraisemblance de chacune d'une pluralité d'hypothèses $Pi$ , i = 1 à N, de position ; lesdites positions $Pi$ étant des positions réparties sur ledit ensemble de trajectoire(s) et dont les coordonnées géographiques sont stockées dans ladite base de données ;

la vraisemblance d'une position ayant été déterminée par le bloc de localisation en fonction au moins des signaux de géopositionnement en provenance d'un système de satellite(s) de géo-positionnement reçus à un instant t par un récepteur satellite embarqué dans l'engin, par exemple en fonction de la corrélation entre ces signaux de géopositionnement et des signaux de géo-stationnement calculés comme devant être reçus à l'instant t à ladite position en provenance du système de satellite(s).

**Résumé de l'invention :**

Suivant un premier aspect, la présente invention décrit un procédé de contrôle d'une localisation estimée d'un engin adapté pour se déplacer sur un ensemble de trajectoire(s) prédéfinie(s) constituées de segments de trajectoire ;

un récepteur satellite embarqué dans l'engin étant adapté pour recevoir à un instant t des signaux de géopositionnement en provenance d'un système de satellites comprenant s satellites $Sk$, k=1 à s et s supérieur ou égal à 2 ; une base de données stockant les coordonnées géographiques de balises virtuelles réparties sur ledit ensemble de trajectoire(s) et stockant en outre, pour chaque balise virtuelle, le cap du segment de trajectoire sur lequel la balise virtuelle se trouve ;

ladite localisation à l'instant t de l'engin telle qu'estimée indiquant une balise virtuelle B1 estimée comme correspondant a priori à ladite localisation de l'engin à l'instant t sur le même segment de trajectoire ;

ledit procédé comprenant les étapes suivantes mises en oeuvre par un bloc électronique de contrôle :

i/ pour k = 1 à s : calcul du retard, $\Delta\tau_{Sk}(t, B1)$, entre le signal de géostationnement reçu par le récepteur satellite à l'instant t depuis le satellite $Sk$ et le signal de géostationnement théorique calculé comme devant être reçu en provenance du satellite $Sk$ à l'instant t à la position de la balise virtuelle B1 telle définie par les coordonnées géographiques dans la base de données ;

ii/ estimation des valeurs $\widehat{cap}, \widehat{RxB1}$ , des paramètres *cap* et *RxB1* vérifiant le système d'équations :

$$\begin{cases} \Delta\tau_{S_1}(t, B1) = \dfrac{1}{c}(\cos(el_1))^{-1}\cos(az'_1)\, RxB1 + \varepsilon_1 \\ \qquad\qquad\vdots \\ \Delta\tau_{S_s}(t, B1) = \dfrac{1}{c}(\cos(el_s))^{-1}\cos(az'_s)\, RxB1 + \varepsilon_s \end{cases}$$

où $az'_k = cap - az_k\ modulo\ 2\pi$ et $el_k$ et $az_k$ sont respectivement l'élévation et l'azimut, connus, du satellite $Sk$ à l'instant t ;

iii/ comparaison de la valeur $\widehat{cap}$ estimée du paramètre cap avec la valeur, stockée dans la base de données, du cap du segment de trajectoire sur lequel la balise B1 se trouve ;

iv/ si la différence est supérieure à un premier seuil prédéfini, ladite localisation estimée à l'instant t est identifiée comme non fiable par ledit bloc de contrôle.

La présente invention permet de fournir, avec une architecture simple, une garantie sur la précision absolue de positionnement d'un engin mobile sur une trajectoire connue pour des applications de sécurité critique (engageant des vies humaines) avec un risque d'erreur encadré et permet de lancer une alerte en cas de perte d'intégrité de la mesure de précision.

Dans des modes de réalisation, un tel procédé comprendra en outre l'une au moins des caractéristiques suivantes :

- une valeur cible, $PND_{voie}$, probabilité de mauvaise détection de trajectoire ayant été fixée :

  - détermination de la valeur seuil $\widehat{RxB1}_0$ pour laquelle on atteint la condition "

    $$p\left(d \leq \left(\widehat{RxB1} + \varepsilon_r\right)\sin\left(\varepsilon_{cap}\right)\right) \leq PND_{voie}$$

    ", $\varepsilon_r$ étant l'erreur entre les distances vraie et estimée entre le récepteur satellite et la balise B1 et $\varepsilon_{cap}$ est la différence entre le cap estimé à l'étape ii et le cap du segment sur lequel se trouve la balise B1 tel qu'indiqué dans la base ;

  - affectation de la valeur seuil déterminée à un niveau de protection PL ;

  - détermination que la position estimée est fiable, respectivement non fiable, en fonction de la comparaison du niveau de protection PL et d'une limite d'alerte AL prédéfinie ;

- on compare la valeur $\widehat{RxB1}$ estimée à l'étape ii/ avec la moitié de la distance minimale entre deux segments adjacents de trajectoires distinctes, et si ladite valeur $\widehat{RxB1}$ estimée est supérieure à ladite moitié de la distance minimale, ladite localisation estimée à l'instant t est identifiée comme non fiable par ledit bloc de contrôle.

Suivant un autre aspect, l'invention décrit un programme d'ordinateur destiné à être stocké dans la mémoire d'un dispositif électronique de contrôle et comprenant en outre un microcalculateur, ledit programme d'ordinateur comprenant des instructions qui, lorsqu'elles sont exécutées sur le microcalculateur, mettent en oeuvre les étapes d'un procédé selon le premier aspect de l'invention.

Suivant un autre aspect, l'invention décrit un dispositif électronique de contrôle d'une localisation estimée d'un engin adapté pour se déplacer sur un ensemble de trajectoire(s) prédéfinie(s) constituées de segments de trajectoire ; un récepteur satellite embarqué dans l'engin étant adapté pour recevoir à un instant t des signaux de géopositionnement en provenance d'un système de satellites comprenant s satellites Sk, k=1 à s et s supérieur ou égal à 2 ; une base de données stockant les coordonnées géographiques de balises virtuelles réparties sur ledit ensemble de trajectoire(s) et stockant en outre, pour chaque balise virtuelle, le cap du segment de trajectoire sur lequel la balise virtuelle se trouve ;

ladite localisation à l'instant t de l'engin telle qu'estimée indiquant une balise virtuelle B1 estimée comme correspondant a priori à ladite localisation de l'engin à l'instant t sur le même segment de trajectoire ;

ledit dispositif électronique de contrôle étant adapté pour calculer, pour k = 1 à s, un retard, $\Delta\tau_{Sk}(t, B1)$, entre le signal de géostationnement reçu par le récepteur satellite à l'instant t depuis le satellite Sk et le signal de géostationnement théorique calculé comme devant être reçu en provenance du satellite Sk à l'instant t à la position de la balise virtuelle B1 telle définie par les coordonnées géographiques dans la base de données ;

ledit dispositif électronique de contrôle étant adapté pour estimer des valeurs, $\widehat{cap}$, $\widehat{RxB1}$, des paramètres respectifs cap et RxB1 vérifiant le système d'équations :

$$\begin{cases} \Delta\tau_{S_1}(t, B1) = \dfrac{1}{c}(\cos(el_1))^{-1}\cos(az_1')\,RxB1 + \varepsilon_1 \\ \qquad\qquad\vdots \\ \Delta\tau_{S_s}(t, B1) = \dfrac{1}{c}(\cos(el_s))^{-1}\cos(az_s')\,RxB1 + \varepsilon_s \end{cases}$$

où $az_k' = cap - az_k\ modulo\ 2\pi$ et $el_k$ et $az_k$ sont respectivement l'élévation et l'azimut, connus, du satellite Sk à l'instant t ;

ledit dispositif électronique de contrôle étant adapté pour comparer la valeur $\widehat{cap}$ estimée du paramètre cap avec la valeur, stockée dans la base de données, du cap du segment de trajectoire sur lequel la balise B1 se trouve, et pour, si la différence est supérieure à un premier seuil prédéfini, identifier ladite localisation estimée à l'instant t comme non fiable.

Dans des modes de réalisation, un tel dispositif comprendra en outre l'une au moins des caractéristiques suivantes :

- il est adapté pour, une valeur cible, PNDvoie, de probabilité de mauvaise détection de trajectoire ayant été fixée, déterminer la valeur seuil $\widehat{RxB1}_0$ pour laquelle la condition " $p\big(d \le \big(\widehat{RxB1} + \varepsilon_r\big)\sin(\varepsilon_{cap})\big) \le \text{PND}_{voie}$ " est atteinte, $\varepsilon_r$ étant l'erreur entre les distances vraie et estimée entre le récepteur satellite et la balise B1 et $\varepsilon_{cap}$ est la différence entre ladite valeur de cap estimée et le cap du segment sur lequel se trouve la balise B1 tel qu'indiqué dans la base (13) ;
ledit dispositif électronique de contrôle étant adapté pour affecter la valeur seuil déterminée à un niveau de protection PL et pour déterminer que la position estimée est fiable, respectivement non fiable, en fonction de la comparaison du niveau de protection PL et d'une limite d'alerte AL prédéfinie ;

- il est adapté pour comparer la valeur $\widehat{RxB1}$ estimée avec la moitié de la distance minimale entre deux segments adjacents de trajectoires distinctes, et pour, si ladite valeur $\widehat{RxB1}$ estimée est supérieure à ladite moitié de la distance minimale, identifier comme non fiable ladite localisation estimée à l'instant t.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 est une illustration de l'intégrité ou de la non intégrité d'une estimation de localisation ;

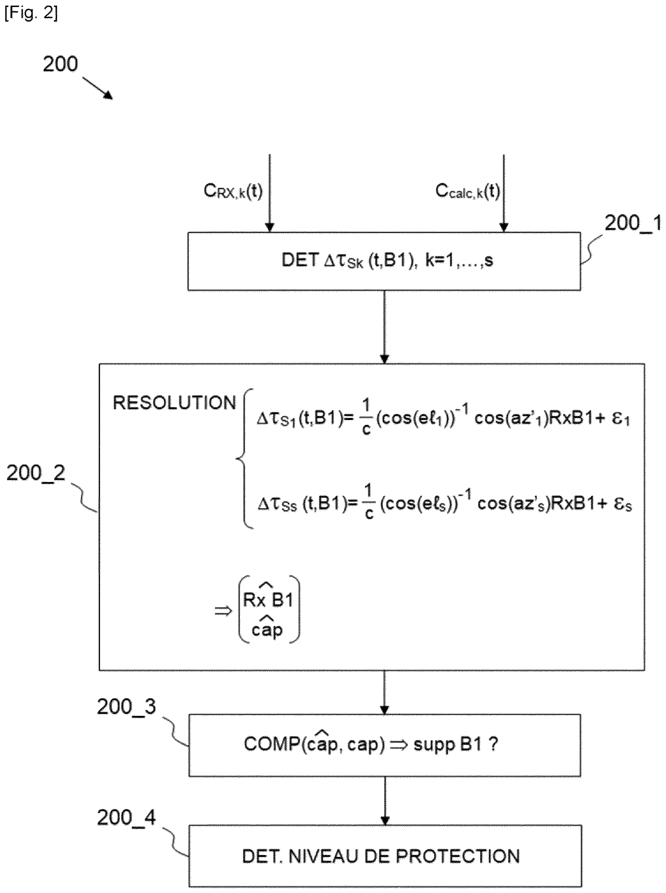

[Fig. 2] La figure 2 représente des étapes d'un procédé de contrôle 200 dans un mode de réalisation de l'invention ;

[Fig. 3] La figure 3 représente schématiquement un système ferroviaire mettant en oeuvre un mode de réalisation de l'invention ;

[Fig. 4] La figure 4 illustre les angles $az'_k$ , $az_k$ et *cap* considérés dans un mode de réalisation de l'invention ;

[Fig. 5] La figure 5 illustre un cas d'erreur d'estimation de segment de voie.

Des références identiques peuvent être utilisées dans des figures différentes lorsqu'elles désignent des éléments identiques ou comparables.

**Description détaillée :**

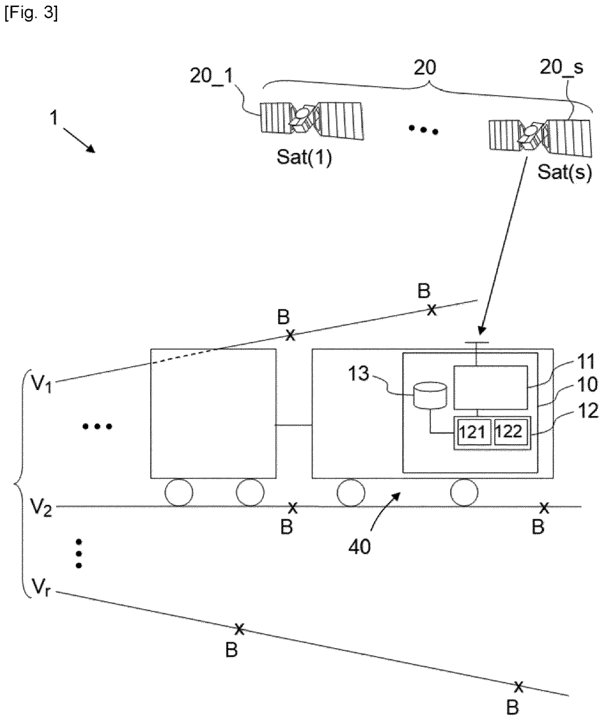

En référence à la Figure 3, un système ferroviaire 1 dans un mode de réalisation de l'invention comprend un ou plusieurs trains, dont le train 40 représenté en figure 3, et qui sont adaptés pour se déplacer sur une trajectoire prédéfinie ou des trajectoires prédéfinies diverses. Chacune de ces trajectoires est représentée par une suite de segments de voie (par exemple segments de rails gauche, ou droit, ou encore de segments -virtuels-disposés entre les rails droit et gauche...).
Le train 40 comporte un bloc électronique de traitement 10 embarqué, qui comprend :

- un bloc RX 11 comprenant un système de positionnement global par satellites GNSS standard ;

- un bloc électronique de localisation 121,

- un bloc électronique de contrôle 122 et

- une base de données topographiques 13.

Sur la figure 3, des segments de voie V1, V2, ..., Vr sont représentés.

Par la suite, on appellera « balise virtuelle » ou « balise », B, une position prédéterminée, ou point de référence, dont on connaît précisément les coordonnées spatiales. Les balises B sont réparties sur les segments de voie, par exemple sur la ligne centrée entre les 2 rails de voie, ou à proximité de la voie, par exemple à moins de 50 cm de cette ligne.

Par exemple, les balises sont espacées de leurs balises les plus proches sur la même voie d'une distance inférieure à D, avec D ici égale à 4 m par exemple.

Les segments de voie, ainsi que les balises, sont en nombre fini. Leur position géographique 3D (par rapport à un référentiel terrestre) et caractéristiques sont référencées dans la base de données topographiques 13. En outre, lesdites caractéristiques figurant dans la base 13 sont par exemple : identifiant de segment, identifiant de balise, longueur de segment, cap du segment (encore appelé cap de piste), association entre identifiant de segment et identifiant des balises situées sur le segment ainsi identifié, valeur des paramètres géométriques par exemple de clothoïde ou de spline, caractéristiques de chaînage dans le réseau ferroviaire (par exemple : identifiant des segments successeurs et prédécesseurs).

Le bloc RX 11, embarqué à bord du train 40, est adapté pour, à partir d'une base de temps locale synchronisée, recevoir des signaux de géo-positionnement émis par un ensemble 20 de satellites de géo-positionnement GNSS 20_1, ..., 20_s, en visibilité du bloc RX 11, avec s supérieur ou égal à 2.

Les satellites GNSS comportent par exemple des satellites du système américain GPS (Global Positioning System) et/ou du système européen GALILEO et/ou du système Glonass ou tout de autre système équivalent. Les positions, qui peuvent évoluer avec le temps, des satellites, sont prédéterminées et connues du récepteur RX 11 (via des données d'éphémérides).

De façon connue, le récepteur GNSS dans le bloc RX 11 est adapté pour, à partir des signaux reçus, effectuer une descente en fréquence en bande de base, pour démoduler le signal et en extraire un signal de géopositionnement comportant la répétition d'un code à 1023 Hz. C'est ce signal mis sous cette forme qui est ensuite nommé « signal reçu » ci-dessous et qui est utilisé pour les calculs de corrélation.

Par ailleurs, de façon connue, le récepteur GNSS est en outre adapté pour extraire des informations de temps et de phase porteuse et calculer, pour chaque satellite en vue, à partir de ces informations reçues, une estimation de la distance entre le dispositif de géolocalisation lui-même et le satellite en vue, également appelée pseudo-distance. La pseudo-distance est différente de la distance effective entre le satellite considéré et le dispositif de géolocalisation à cause des erreurs d'estimation du temps de propagation, dues par exemple aux conditions atmosphériques dans la troposphère, dans la ionosphère et de l'erreur de synchronisation de l'horloge interne du récepteur de géolocalisation. Il est cependant possible d'éliminer les erreurs communes (dont le biais de temps du récepteur) en s'appuyant sur les informations transmises par une pluralité de satellites distincts.

Par exemple, le code d'acquisition C/A (pour « Coarse Acquisition » ou acquisition grossière) dans le cas GPS est un signal numérique composé de 1023 chips et qui se répète toutes les millisecondes. Il est à remarquer que le terme « chip » utilisé dans les techniques GNSS est à différencier du terme « bit » qui est utilisé pour définir une unité d'information. Le code utilisé dans le cas Galileo est un code PRN.

Le bloc de localisation 121 est adapté pour estimer la position du train 40 considérée à l'instant t. Le résultat de cette estimation de localisation comprend la position de la balise par exemple estimée la plus proche du train 40. On souhaite notamment valider que obtenir de la balise est bien située sur le même segment de voie que le train. Etre certain de la voie du train est en effet un élément majeur de sécurité pour éviter des accidents.

Dans un mode de réalisation, plusieurs hypothèses de position estimée du train considérée à l'instant t sont fournies.

L'estimation de la localisation est effectuée dans un mode de réalisation, en fonction notamment des signaux de positionnement satellite reçus par le bloc RX 11 en sa position à estimer, et/ou en fonction par exemple de mesures d'une centrale inertielle embarquée et/ou en fonction de mesures par un odomètre. Par exemple, l'estimation de position du train est effectuée en utilisant une technique connue dite PVT (Position-Vitesse-Temps).

Par exemple, exploitant le fait que la trajectoire du train 10 emprunte forcément les segments de voie ferrée, qui sont connus et sur lesquels figurent des balises, le bloc de localisation 121 est adapté, dans un mode de réalisation, pour rechercher la balise virtuelle B (et par conséquent la voie associée Vi) la plus proche de l'emplacement du bloc RX 11 embarqué à bord du train 10 en exploitant le signal GNSS reçu et la connaissance a priori des positions des balises virtuelles B, fixées et prédéterminées fournie par la base des données topographiques 13.

Dans un tel cas, la recherche de la position de cette balise virtuelle est mise en oeuvre par corrélation des signaux GNSS reçus, à la date t de référence locale du récepteur GNSS, par le bloc RX 11 en provenance de chacun des divers satellites visibles Sk avec les signaux de codes attendus (signaux de codes répliques) de ce satellite à la même date t de référence locale du récepteur GNSS, et calculés pour les positions Pi de balises virtuelles Bi, pour i variant de 1 à N (chacune des positions Pi étant une hypothèse de positionnement du train 40 à l'instant t) : on compare entre elles la vraisemblance des différentes hypothèses de positions Pi du train sur les voies, en fonction des corrélations calculées, l'hypothèse finalement retenue correspondant à un maximum de la fonction de vraisemblance et donc de corrélation. Différentes méthodes appliquant ces principes sont par exemple décrites dans FR 2 114 635, FR 1 601 449, FR 1 800 423, EP 3 751 315.

**Procédé de contrôle d'intégrité**

L'invention propose un procédé de contrôle d'intégrité, décrit ci-dessous dans un mode de réalisation, d'une position du train 40 précédemment déterminée par le bloc de localisation 121, comme correspondant à la position d'une des balises virtuelles, nommée B1.

Dans le mode de réalisation, considéré ici, le bloc de contrôle 122 est adapté pour mettre en oeuvre les étapes 200_1 à 200_6 du procédé de contrôle d'intégrité 200, en considérant au moins deux des satellites (i.e. k au minimum pris égal à deux).

Dans un mode de réalisation, le bloc de traitement 10 comprend un processeur et une mémoire, dans lesquelles sont stockées des instructions logicielles, qui lorsqu'elles sont exécutées sur le processeur, mettent en oeuvre les étapes du procédé 200.

La solution proposée selon l'invention utilise le principe de corrélation avec des balises virtuelles et tire profit de la connaissance du cap de segment de voie pour vérifier la qualité des estimations de position. Le cap de segment de voie est en effet à la fois connu grâce à la base de données 13, et est par ailleurs solution d'équations géométriques en présence d'au moins 2 satellites.

La détection d'erreur selon la solution proposée de contrôle d'intégrité se base sur les retards de code par satellite, par exemple obtenus via des calculs de corrélation. On utilise la différence entre les retards de code mesuré au récepteur, et le retard de code théorique calculé au niveau de la balise.

Dans une étape 200_1, pour chaque satellite Sk considéré, le retard de code entre le signal de positionnement provenant du satellite Sk, reçu par le bloc RX 11 en sa position objet de l'estimation à l'instant t, $c_{RX,k}(t)$, et le signal de code réplique de ce satellite à la même date $\underline{t}$ de référence locale du récepteur GNSS, et calculé comme devant être reçu en position P1 de la balise virtuelle B1, $\bar{c}_{calcB1,k}(t)$, est déterminé (par exemple à l'aide des calculs de corrélation effectués lors de l'estimation préalable de la position du train 40 par le bloc de localisation 121.

Par ailleurs, le retard théorique entre le code entre le signal émis par le satellite Sk et celui arrivant à la balise B1 peut être modélisé de la façon suivante :

$$\tau_{S_k}^{th}(t, B1) = \frac{Sk(t)B1}{c} + \varepsilon_{iono}(Sk, B1, t) + \varepsilon_{tropo}(Sk, B1, t) + \varepsilon_{res}(t)$$

où Sk(t)B1 est la distance entre le satellite Sk et la balise B1 à l'instant t et $c$ la vitesse de la lumière.

On suppose dans ce cadre que les erreurs ionosphériques $\varepsilon_{iono}$ et $\varepsilon_{tropo}$ troposphériques sont parfaitement connues, et sont inclut également dans ces erreurs les erreurs d'horloge et d'orbite satellite. $\varepsilon_{res}$ est l'erreur résiduelle (non connue) après correction des erreurs troposphériques, ionosphériques et d'orbite et horloge satellite. Le biais d'horloge récepteur peut être connu via le calcul de PVT.

Les erreurs d'orbites et horloges satellites sont les mêmes pour le retard théorique et le retard mesuré.

Le retard de code entre le signal émis par le satellite Sk et celui arrivant au bloc Rx 11 et mesuré par le bloc RX 11, lui, peut s'exprimer sous la forme :

$$\tau_{S_k}^{meas}(t, Rx) = \frac{Sk(t)Rx}{c} + \varepsilon_{Rx_{clk}}(t) + \varepsilon_{iono}(Sk, Rx, t) + \varepsilon_{tropo}(Sk, Rx, t) + \varepsilon_{meas}(t)$$

où Sk(t)Rx est la distance entre le satellite Sk et le récepteur RX 11 l'instant t.

On suppose que l'ambiguïté entière du retard de code est connue.

Les retards ionosphérique et troposphérique étant spatialement corrélés :

$$\varepsilon_{iono}(S1, B1, t) \approx \varepsilon_{iono}(S1, Rx, t) \; ;$$

$$\varepsilon_{tropo}(S1, B1, t) \approx \varepsilon_{tropo}(S1, Rx, t) \; ;$$

Le calcul de la différence s'écrit :

$$\Delta\tau_{S_k}(t, B1) = \tau_{S_k}^{meas}(t, Rx) - \tau_{S_k}^{th}(t, B1),$$

soit :
en développant au premier ordre :

$$\Delta\tau_{S_k}(t, B1) = \frac{S1(t)Rx}{c} - \frac{S1(t)B1}{c} + \varepsilon \approx \frac{1}{c}(\cos(el_k))^{-1}\cos(az_k')\, RxB1 + \varepsilon \; .$$

Cette différence dépend de la distance, nommée *RxB1,* entre la balise B1 et récepteur RX 11, de l'élévation $el_k$ du satellite Sk à l'instant t, et d'un terme en azimut relatif, $az_k'$ , dépendant également du cap, noté *cap,* entre la ligne balise B1 - récepteur RX 11 et le Nord :

$$az_k' = cap - az_k \; modulo \; 2\pi$$ où $az_k$ est l'azimut du satellite Sk à l'instant t, dont la valeur est connue.

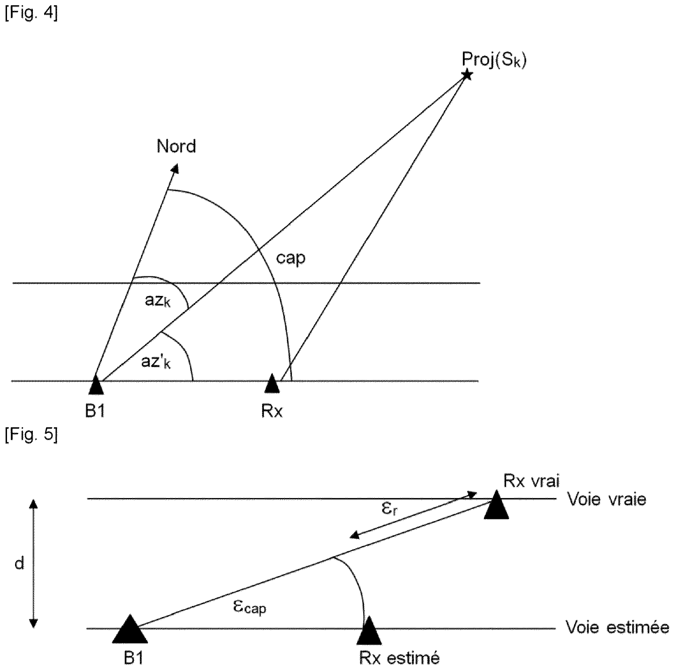

La figure 4 représente les angles $az_k'$ , $az_k$ et *cap* relatifs au segment de trajectoire, à la balise virtuelle B1, à la position réelle du bloc RX 11, au Nord et à la projection, Proj(Sk), de la position du satellite sur le plan (local à la position du train) de la surface terrestre.

On s'affranchit du biais d'horloge après un calcul de PVT. Le terme dépendant du cap vient ajouter des capacités de détection, car les caps de segment de voie sont connus, et une mauvaise détection de voie serait liée à l'utilisation d'un mauvais cap.

Le procédé de contrôle d'intégrité 200 consiste à permettre de se protéger contre le cas où une valeur de cette métrique $\Delta\tau_{Sk}(t, B1)$ est faible, mais avec une distance balise récepteur importante compensée par une erreur résiduelle forte. L'information de cap va en plus permettre de se prémunir contre une mauvaise détection de voie.

On suppose pour l'étape suivante que le cap du segment de voie sur lequel est le train à l'instant t est inconnu : le vecteur d'état dont la valeur est recherchée a donc 2 dimensions, ce vecteur d'état est $\begin{bmatrix} \widehat{RxB1} \\ cap \end{bmatrix}$ .

Ainsi, dans une étape 200_2, une méthode de résolution de systèmes d'équations non linéaires est ensuite mise en oeuvre pour estimer le vecteur $\begin{bmatrix} \widehat{RxB1} \\ cap \end{bmatrix}$ vérifiant le système d'équations suivant :

$$\Delta\tau_{S_k}(t, B1) = \frac{S1(t)Rx}{c} - \frac{S1(t)B1}{c} + \varepsilon \approx \frac{1}{c}(\cos(el_k))^{-1}\cos(az_k')\, RxB1 + \varepsilon \; ;$$

$$\Delta\tau_{S_1}(t, B1) = \frac{1}{c}(\cos(el_1))^{-1}\cos(az_1')\, RxB1 + \varepsilon_1$$
$$\vdots$$
$$\Delta\tau_{S_s}(t, B1) = \frac{1}{c}(\cos(el_s))^{-1}\cos(az_s')\, RxB1 + \varepsilon_s$$

les valeurs $\Delta\tau_{Sk}(t, B1)$, k = 1 à s, étant celles calculées à l'étape 200_1.

Les variables $\varepsilon_1,...,\varepsilon_s$ peuvent être considérées comme des variables aléatoires du système. Des méthodes de résolution du système sont sinon possibles en prenant en compte la distribution statistique de ces variables aléatoires, méthode minimisant l'erreur d'estimation en prenant en compte de ces distributions (cf. moindres carrés).

On cherche à maîtriser la probabilité de ne pas être sur la bonne voie.

Dans une étape 200_3, on compare (si le bloc Rx 11 est censé être sur la même voie que la balise B1), le cap estimé à l'étape 200_2 à la valeur du cap de segment de voie auquel appartient B1 d'après la base de données 13 : si la différence (en valeur absolue) est supérieure à un seuil prédéfini, la localisation estimée de l'engin à l'instant t est identifiée comme localisation non fiable et une action est déclenchée (alerte...) pour en informer le bloc de traitement et/ou l'utilisateur.

Dans un mode de réalisation, ce seuil prédéfini d'erreur de cap tolérable est pris égal à 15° ; la valeur est à fixer en fonction de la performance souhaitée et de la précision de la détection de la balise.

Les erreurs d'estimations de distance et de cap sont notées comme suit :

$$\begin{cases} \varepsilon_r = RxB1 - \widehat{RxB1} \\ \varepsilon_{cap} = cap - \widehat{cap} \end{cases}$$

La figure 5 représente le cas d'une erreur d'estimation de voie , où « Rx vrai » est la position réelle du bloc Rx 11 du train 40 à l'instant t sur une voie donnée (nommée voie vraie), tandis que la position estimée à l'instant t du bloc Rx 11 se trouve au point « Rx estimé », la balise B1 ayant été estimée, lors de l'estimation de localisation du train comme, comme « balise virtuelle la plus proche du train et sur la même voie » potentielle.

Il existe une infinité de couple d'erreur de distance, $\varepsilon_r$, et de cap, $\varepsilon_{cap}$, tels qu'une erreur de voie soit commise.

Ces couples sont reliés par l'équation suivante :

$$d = \left(\widehat{RxB1} + \varepsilon_r\right)\sin\left(\varepsilon_{cap}\right)$$

où d est la distance entre les voies,

Pour une erreur de cap maîtrisée, i.e. inférieure à un seuil d'erreur acceptable prédéfini, il faudrait donc une forte erreur de distance pour estimer une voie à tort.

Théoriquement on a donc :

$$p\left(mauvaise\ voie\ (adjacente)\right) = p\left(d = \left(\widehat{RxB1} + \varepsilon_r\right)\sin\left(\varepsilon_{cap}\right)\right)$$

Pour simplifier le raisonnement, on considère l'inégalité :

$$p(mauvaise\ voie) = p\left(d \le \left(\widehat{RxB1} + \varepsilon_r\right)\sin\left(\varepsilon_{cap}\right)\right) \le p\left(d \le \left(\frac{d}{2} + \varepsilon_r\right)\sin\left(\varepsilon_{cap}\right)\right)$$

Le membre droit de l'équation se vérifie après une étape d'exclusion (comme non fiable) de la balise B1 pour laquelle $\widehat{RxB1} > \frac{d}{2}$.

Les erreurs doivent être bornées de sorte que

$$p\left(d \le \left(\frac{d}{2} + \varepsilon_r\right)\sin(\varepsilon_{cap})\right) = PND_{voie}$$

où $PND_{voie}$ est la probabilité de non détection par le contrôle d'intégrité qu'une mauvaise voie est estimée, valeur fixée, par exemple dans l'exemple considéré :

$$p\left(d \le \left(\frac{d}{2} + \varepsilon_r\right)\sin(\varepsilon_{cap})\right) = PND_{voie} \le 10^{-10}$$

On constate que dans le cas de détection de mauvaise voie, l'erreur de distance est supérieure à d/2 quelle que soit l'erreur de cap.

Des hypothèses de distribution statistique des erreurs de cap et de distance étant dérivables d'un modèle d'erreur des signaux satellite, une zone de protection en distance et en cap pour que $PND_{voie}$ = $10^{-10}$, notamment le seuil prédéfini d'erreur de cap tolérable mentionné ci-dessus, peut préalablement être définie de cette manière.

Dans une étape 200_4, le raisonnement peut alors encore être simplifié en faisant une allocation sur l'erreur de cap (en effet, $\varepsilon_{cap}$ est connu concernant l'estimation de position du train à l'instant t), pour en déduire une valeur d'erreur de distance pour laquelle la $PND_{voie}$ de $10^{-10}$ serait atteint. Cette erreur de distance correspond à un niveau de protection pour l'événement erreur de voie.

Le problème peut être élargi en introduisant une incertitude sur la connaissance de la carte. D'autres termes d'erreurs seraient dans ce cadre à introduire. La prise en compte de ces incertitudes peut permettre d'ouvrir le champ des applications.

Dans un mode de réalisation, la valeur de RXB1 estimée à l'étape 200_2 est utilisée pour donner un niveau de confiance sur la détection de balise, après la détection de voie.

<u>Calcul du niveau de</u> protection : il est donc déterminé la valeur seuil de $\widehat{RxB1}$ , nommée $\widehat{RxB1}_0$ , pour laquelle on atteint la condition " la probabilité de détection de mauvaise voie, définie par

$$p\left(d \le \left(\widehat{RxB1} + \varepsilon_r\right)\sin(\varepsilon_{cap})\right)$$

, est inférieure à $10^{-10}$ " ; en faisant l'hypothèse d'une continuité de balise virtuelle, le niveau de protection PL est alors déterminé : il est pris égal à cette distance estimée $\widehat{RxB1}$ pour laquelle on atteint « la probabilité de détection de mauvaise voie est inférieure à $10^{-10}$ ».

Le niveau de protection PL calculé est ensuite comparé avec une limite d'alerte AL prédéfinie. Si le niveau de protection est supérieur à la limite d'alerte AL, la position estimée à l'instant t est déclarée non fiable : une action d'alerte est alors déclenchée pour prévenir de la non disponibilité de l'information de position. Si le niveau de protection est inférieur à la limite d'alerte AL, la position estimée est déclarée fiable, et les traitements ultérieurs qui sont fonction de cette position estimée ont alors lieu.

L'invention est applicable tant dans le cas du train à l'arrêt ou en cold start, qu'en mouvement.

L'invention, utilisant le cap, grandeur connue via la base de données, comme variable, compense ainsi l'incertitude de choix d'une balise. L'espace des erreurs est réduit grâce à la connaissance du cap. Cette solution ne nécessite pas d'autre capteurs que des capteurs GNSS, et ne nécessite pas d'appréhender la forme du signal.

On notera que l'invention peut être exploitée dans un traitement de contrôle d'intégrité d'une localisation estimé d'un engin mobile, mais aussi dans un traitement de détection, parmi plusieurs balises virtuelles candidates correspondant à la localisation d'un engin mobile, de celle(s) valable(s) et non valable(s).

Le procédé 200, peut être mis en oeuvre par l'exécution d'instructions logicielles sur un processeur, comme décrit plus haut. Alternativement, l'un et/ou l'autre peuvent être mis en oeuvre par un hardware dédié, typiquement un circuit intégré numérique, soit spécifique (ASIC) ou basé sur une logique programmable (par exemple FPGA/Field Programmable Gate Array).

Le procédé de contrôle d'intégrité selon l'invention est bien sûr utilisable, au-delà du domaine ferroviaire, dans tout système dans lequel il est nécessaire d'estimer la position d'un engin dont le déplacement n'est possible que sur un ensemble prédéterminé et fini de trajectoires, une base de données stockant le géo-référencement de balises virtuelles se trouvant sur les trajectoires. La valeur d est alors la distance entre la trajectoire prédéfinie considérée et celle des trajectoires prédéfinies qui lui est la plus proche.

Dans un mode de réalisation, le procédé de détermination de position et/ou le procédé de contrôle d'intégrité d'une position estimée peut prendre en compte des aspects multiconstellation (idem peut prendre en compte des signaux de positionnement sur des fréquences distinctes) : par exemple, le procédé de contrôle d'intégrité décrit est réalisé, délivrant un cap et un niveau de protection, en fonction de satellites d'une constellation et à l'aide d'un premier récepteur et est aussi réalisé en parallèle, délivrant un autre rayon de protection, à l'aide d'un deuxième récepteur embarqué et en fonction des satellites d'une autre constellation. Une valeur finale de rayon de protection est déterminée en fonction d'une combinaison ou comparaison de ces rayons de protection. Ceci permet d'augmenter les capacités de détection, d'obtenir des niveaux de protection plus étroits, les mesures pour des fréquences/constellations distinctes n'étant pas affectées par les mêmes erreurs.

On notera par ailleurs, qu'il a été décrit plus haut les mesures des codes dans les signaux de positionnement. Les phases des porteuses des signaux de positionnement peuvent également être considérées à la place des mesures de codes ou en plus, tant pour l'estimation des positions que pour le contrôle d'intégrité.

**Revendications**

1. Procédé de contrôle d'une localisation estimée d'un engin (40) adapté pour se déplacer sur un ensemble de trajectoire(s) prédéfinie(s) (V1, V2) constituées de segments de trajectoire ;

   un récepteur satellite (11) embarqué dans l'engin (40) étant adapté pour recevoir à un instant t des signaux de géopositionnement en provenance d'un système (20) de satellites comprenant s satellites Sk, k=1 à s et s supérieur ou égal à 2 ;
   une base de données (13) stockant les coordonnées géographiques de balises virtuelles (B) réparties sur ledit ensemble de trajectoire(s) et stockant en outre, pour chaque balise virtuelle, le cap du segment de trajectoire sur lequel la balise virtuelle se trouve ;
   ladite localisation à l'instant t de l'engin telle qu'estimée indiquant une balise virtuelle B1 estimée comme correspondant a priori à ladite localisation de l'engin à l'instant t sur le même segment de trajectoire ;
   ledit procédé comprenant les étapes suivantes mises en oeuvre par un bloc électronique de contrôle (12) :

   i/ pour k = 1 à s : calcul du retard, $\Delta\tau_{Sk}(t, B1)$, entre le signal de géostationnement reçu par le récepteur satellite à l'instant t depuis le satellite Sk et le signal de géostationnement théorique calculé comme devant être reçu en provenance du satellite Sk à l'instant t à la position de la balise virtuelle B1 telle définie par les coordonnées géographiques dans la base de données ;

   ii/ estimation des valeurs $\widehat{cap}, \widehat{RxB1}$, des paramètres respectifs *cap* et *RxB1* vérifiant le système d'équations :

$$\Delta\tau_{S_1}(t, B1) = \frac{1}{c}(\cos(el_1))^{-1}\cos(az_1')\, RxB1 + \varepsilon_1$$
$$\vdots$$
$$\Delta\tau_{S_s}(t, B1) = \frac{1}{c}(\cos(el_s))^{-1}\cos(az_s')\, RxB1 + \varepsilon_s$$

   où $az_k' = cap - az_k\ modulo\ 2\pi$ et $el_k$ et $az_k$ sont respectivement l'élévation et l'azimut, connus, du satellite Sk à l'instant t ;

   iii/ comparaison de la valeur $\widehat{cap}$ estimée du paramètre cap avec la valeur, stockée dans la base de données (13), du cap du segment de trajectoire sur lequel la balise B1 se trouve ;
   iv/ si la différence est supérieure à un premier seuil prédéfini, ladite localisation estimée à l'instant t est identifiée comme non fiable par ledit bloc de contrôle.

2. Procédé de contrôle selon la revendication 1, comprenant en outre les étapes suivantes, une valeur cible, $PND_{voie}$, de probabilité de mauvaise détection de trajectoire ayant été fixée :

   - détermination de la valeur seuil $\widehat{RxB1}_0$ pour laquelle on atteint la condition " $p(d\ \leq$

$$\left(\widehat{RxB1} + \varepsilon_r\right) \sin\left(\varepsilon_{cap}\right)) \le PND_{voie}$$

", d étant la distance entre les trajectoires, $\varepsilon_r$ étant l'erreur entre la distance vraie et la distance estimée, $\widehat{RxB1}$ , entre le récepteur satellite et la balise B1 et $\varepsilon_{cap}$ est la différence entre le cap estimé à l'étape ii et le cap du segment sur lequel se trouve la balise B1 tel qu'indiqué dans la base (13) ;

- affectation de la valeur seuil déterminée à un niveau de protection PL ;
- détermination que la position estimée est fiable, respectivement non fiable, en fonction de la comparaison du niveau de protection PL et d'une limite d'alerte AL prédéfinie.

**3.** Procédé de contrôle selon la revendication 1 ou 2, selon lequel on compare la valeur $\widehat{RxB1}$ estimée à l'étape ii/ avec la moitié de la distance minimale entre deux segments adjacents de trajectoires distinctes, et si ladite valeur RxB1 estimée est supérieure à ladite moitié de la distance minimale, ladite localisation estimée à l'instant t est identifiée comme non fiable par ledit bloc de contrôle (10).

**4.** Programme d'ordinateur, destiné à être stocké dans la mémoire d'un dispositif électronique de contrôle (12) et comprenant en outre un microcalculateur, ledit programme d'ordinateur comprenant des instructions qui, lorsqu'elles sont exécutées sur le microcalculateur, mettent en oeuvre les étapes d'un procédé selon l'une des revendications précédentes.

**5.** Dispositif électronique de contrôle (10) d'une localisation estimée d'un engin (40) adapté pour se déplacer sur un ensemble de trajectoire(s) prédéfinie(s) (V1, V2) constituées de segments de trajectoire ; un récepteur satellite (11) embarqué dans l'engin (40) étant adapté pour recevoir à un instant t des signaux de géopositionnement en provenance d'un système (20) de satellites comprenant s satellites Sk, k=1 à s et s supérieur ou égal à 2 ; une base de données (13) stockant les coordonnées géographiques de balises virtuelles (B) réparties sur ledit ensemble de trajectoire(s) et stockant en outre, pour chaque balise virtuelle, le cap du segment de trajectoire sur lequel la balise virtuelle se trouve ;

ladite localisation à l'instant t de l'engin telle qu'estimée indiquant une balise virtuelle B1 estimée comme correspondant a priori à ladite localisation de l'engin à l'instant t sur le même segment de trajectoire ;
ledit dispositif électronique de contrôle étant adapté pour calculer, pour k = 1 à s, un retard, $\Delta\tau_{Sk}(t, B1)$, entre le signal de géostationnement reçu par le récepteur satellite à l'instant t depuis le satellite Sk et le signal de géostationnement théorique calculé comme devant être reçu en provenance du satellite Sk à l'instant t à la position de la balise virtuelle B1 telle définie par les coordonnées géographiques dans la base de données ;

ledit dispositif électronique de contrôle étant adapté pour estimer des valeurs, $\widehat{cap}, \widehat{RxB1}$ , des paramètres respectifs *cap* et *RxB1* vérifiant le système d'équations :

$$\Delta\tau_{S_1}(t, B1) = \frac{1}{c}(\cos(el_1))^{-1}\cos(az_1') RxB1 + \varepsilon_1$$
$$\vdots$$
$$\Delta\tau_{S_s}(t, B1) = \frac{1}{c}(\cos(el_s))^{-1}\cos(az_s') RxB1 + \varepsilon_s$$

où $az_k' = cap - az_k \, modulo \, 2\pi$ et $el_k$ et $az_k$ sont respectivement l'élévation et l'azimut, connus, du satellite Sk à l'instant t ;

ledit dispositif électronique de contrôle étant adapté pour comparer la valeur $\widehat{cap}$ estimée du paramètre cap avec la valeur, stockée dans la base de données (13), du cap du segment de trajectoire sur lequel la balise B1 se trouve, et pour, si la différence est supérieure à un premier seuil prédéfini, identifier ladite localisation estimée à l'instant t comme non fiable.

**6.** Dispositif électronique de contrôle (10) d'une localisation estimée selon la revendication 5, adapté pour, une valeur

cible, PND$_{voie}$, de probabilité de mauvaise détection de trajectoire ayant été fixée, déterminer la valeur seuil $\widehat{RxB1}_0$

pour laquelle la condition " $p\left(d \leq \left(\widehat{RxB1} + \varepsilon_r\right) \sin\left(\varepsilon_{cap}\right)\right) \leq PND_{voie}$ " est atteinte, d étant la distance entre

les trajectoires, $\varepsilon_r$ étant l'erreur entre la distance vraie et la distance estimée, $\widehat{RxB1}$, entre le récepteur satellite et la balise B1 et $\varepsilon_{cap}$ est la différence entre ladite valeur de cap estimée et le cap du segment sur lequel se trouve la balise B1 tel qu'indiqué dans la base (13) ;

ledit dispositif électronique de contrôle étant adapté pour affecter la valeur seuil déterminée à un niveau de protection PL et pour déterminer que la position estimée est fiable, respectivement non fiable, en fonction de la comparaison du niveau de protection PL et d'une limite d'alerte AL prédéfinie.

7. Dispositif électronique de contrôle (10) d'une localisation estimée selon la revendication 5 ou 6, adapté pour comparer la valeur $\widehat{RxB1}$ estimée avec la moitié de la distance minimale entre deux segments adjacents de trajectoires distinctes, et pour, si ladite valeur $\widehat{RxB1}$ estimée est supérieure à ladite moitié de la distance minimale, identifier comme non fiable ladite localisation estimée à l'instant t.

[Fig. 1]

[Fig. 2]

200

$C_{RX,k}(t)$      $C_{calc,k}(t)$

DET $\Delta\tau_{Sk}(t,B1)$, k=1,...,s    200_1

200_2

RESOLUTION
$$\begin{cases} \Delta\tau_{S_1}(t,B1)=\dfrac{1}{c}\left(\cos(e\ell_1)\right)^{-1}\cos(az'_1)RxB1+\varepsilon_1 \\[2em] \Delta\tau_{Ss}(t,B1)=\dfrac{1}{c}\left(\cos(e\ell_s)\right)^{-1}\cos(az'_s)RxB1+\varepsilon_s \end{cases}$$

$$\Rightarrow \begin{pmatrix} \widehat{RxB1} \\ \widehat{cap} \end{pmatrix}$$

200_3    COMP$(\widehat{cap}, cap) \Rightarrow$ supp B1 ?

200_4    DET. NIVEAU DE PROTECTION

17

EP 4 443 197 A1

[Fig. 3]

[Fig. 4]

[Fig. 5]

Europäisches
Patentamt

European
Patent Office

Office européen
des brevets

# RAPPORT DE RECHERCHE EUROPEENNE

Numéro de la demande

EP 24 16 8209

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2019/211302 A1 (THALES SA [FR]) 7 novembre 2019 (2019-11-07) * le document en entier * ----- | 1-7 | INV. G01S19/20 B61L25/02 G01S19/50 |
| A | EP 3 751 315 A1 (THALES SA [FR]) 16 décembre 2020 (2020-12-16) * le document en entier * ----- | 1-7 | |

**DOMAINES TECHNIQUES RECHERCHES (IPC)**

G01S
B61L

Le présent rapport a été établi pour toutes les revendications

| Lieu de la recherche | Date d'achèvement de la recherche | Examinateur |
|---|---|---|
| Munich | 12 août 2024 | Galmiche, Aurélien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 16 8209

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-08-2024

| Document brevet cité au rapport de recherche | Date de publication | Membre(s) de la famille de brevet(s) | Date de publication |
|---|---|---|---|
| WO 2019211302 A1 | 07-11-2019 | CA 3100131 A1 | 07-11-2019 |
| | | CN 112135764 A | 25-12-2020 |
| | | EP 3787951 A1 | 10-03-2021 |
| | | FR 3080823 A1 | 08-11-2019 |
| | | WO 2019211302 A1 | 07-11-2019 |
| EP 3751315 A1 | 16-12-2020 | CA 3083378 A1 | 13-12-2020 |
| | | CN 112083458 A | 15-12-2020 |
| | | EP 3751315 A1 | 16-12-2020 |
| | | US 2022135096 A1 | 05-05-2022 |
| | | WO 2020249874 A1 | 17-12-2020 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2114635
- FR 1601449
- FR 1800423
- EP 3751315 A